# EUROPEAN PATENT SPECIFICATION

(11) **EP 0 796 391 B1**
(45) Date of publication and mention of the grant of the patent: **03.02.1999**
(21) Application number: 95938521.2
(22) Date of filing: 01.12.1995
(51) Int. Cl.: F01N 7/08, F02B 37/02, F02B 37/12, F02M 25/07

(54) **ENGINE EXHAUST SYSTEM**
BRENNKRAFTMASCHINE
SYSTEME D'ECHAPPEMENT POUR MOTEUR

(30) Priority: 02.12.1994 GB 9424334
(43) Date of publication of application: 24.09.1997
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR); Ford Motor Company, Dearborn, MI 48126 (US)
(72) Inventor: MA, Thomas, Tsoi, Hei, South Woodham Ferrers, Essex CM3 5YB (GB)
(74) Representative: Messulam, Alec Moses
(86) International application number: GB9502810
(87) International publication number: WO9617158

(56) References cited:
- EP-A- 0 247 631
- PATENT ABSTRACTS OF JAPAN vol. 11 no. 321 (M-633) ,20 October 1987 & JP,A,62 103419 (MAZDA MOTOR) 13 May 1987,

## Description

### Field of the invention

The present invention relates to an exhaust system for an internal combustion engine and is applicable to both spark ignition and diesel engines.

### Summary of the invention

According to the present invention, there is provided a multicylinder engine exhaust manifold system comprising a first manifold having branches leading from individual exhaust ports of the engine to a downpipe, and a second manifold for interconnecting the exhaust ports and also having branches leading to the individual exhaust ports of the engine, the cross-sectional area of each branch of the second manifold facing the exhaust flow from the associated exhaust valve being no less than 25% of the total port area, characterised in the branches of the second manifold, in common with the branches of the first manifold terminate within the ports in close proximity to the exhaust valves, hereby a large proportion of the exhaust flow discharged from the exhaust valve of one cylinder is captured by the associated branch of the second manifold and distributed by the second manifold to the exhaust ports of adjacent cylinders where the exhaust valves are closed and leave the exhaust ports of the adjacent cylinders through the associated branches of the first manifold, scouring the closed ends of the exhaust ports in the process.

The invention finds application in diesel engines because the gases reaching the exhaust downpipe after passing through the second manifold and more than one exhaust port spend more time in thermal contact with the engine body and reject more heat to the engine coolant system, thereby permitting more rapid warming of the engine and the vehicle.

Warming up of the passenger compartment is often a problem in vehicles fitted with a diesel engine because of the high efficiency and low heat rejection of such engines.

In spark ignition engines, the invention offers the advantage of reducing hydrocarbon emissions by promoting thermal oxidation in close proximity to the hot exhaust valve by mixing oxygen rich regions of the gases from one cylinder with the hydrocarbon rich regions that tend to remain stagnant in the unscavenged exhaust ports.

If desired, the second manifold may also be connected to the downpipe of the exhaust system through a valve to vary the proportion of gases that are recirculated through the second manifold in dependence upon the engine operating conditions. Thus at high engine load and speed, the valve may be fully open so that all gases are directly discharged without interchange between the cylinder ports.

If the exhaust system is fitted with a turbocharger, the latter may be connected between the first manifold and the downpipe, while the waste gate may be connected between the second manifold and the downpipe, whereby the waste gate may act as the proportioning valve between the manifolds.

In an engine having exhaust gas recirculation (EGR), the EGR gases may conveniently be taken from the second manifold through an EGR valve so that the gases recirculated to the engine intake system are those drawn from close proximity to the exhaust valves, where the regions with the highest hydrocarbon content tend to collect.

### Comparison with the prior art

There are known from the prior art, systems that include small diameter pipes connected to the individual exhaust branches and opening near to the exhaust valves. In these cases, which are discussed individually below, the diameters of these additional pipes are too small to achieve the same results as in the present invention.

First, it is known to inject air directly into each exhaust port close to the back of exhaust valve to promote oxidation of unburnt hydrocarbons. Here, the discharge area of the air pipes is much smaller than 25% of the port area (typically less than 10%). Usually the discharge end is pinched and drilled from the side to form orifices to ensure equal flow distribution between cylinders.

Second, it is known to provide pipes to draw EGR gases from each exhaust port near the back of each exhaust valve. The entrance area of EGR pipe is much smaller than 25% of the port area (typically less than 10%). Usually the tapping is formed on the wall of the port to avoid the pipe obstructing the exhaust flow.

In both cases, when not in use, the pipes form an interconnecting network similar to this invention, and will function to a small extent as a balancing manifold similar to this invention. However they are not effective in producing the desired effects mentioned in this invention namely, enhanced heat transfer from exhaust gas to coolant, and enhanced oxidation between different pockets of the exhaust gas without relying on air injection, because they are not designed to have sufficient cross-sectional area facing the exhaust flow to make use of the dynamic head and distribute at least 25% of the exhaust flow from the discharging cylinder to the exhaust ports of the adjacent cylinders.

The recirculated flow in the present invention must be sufficiently large for the desired effects to be useful. Neither one of the prior art proposals provides sufficient facing cross-section area to create the necessary recirculated flows, because the intended flow quantity in their respective application of delivering air or extracting EGR does not require such large flow areas. Indeed, it is undesirable to increase the flow area unnecessarily, because this would result in poor flow distribution between cylinders, inaccurate flow metering and coarse flow control, all of which must be avoided to ensure a refined air injection or EGR system.

Furthermore, it was thought incorrectly that the presence of such a large pipe would excessively obstruct the exhaust flow, not appreciating the fact that pipes connected to adjacent cylinders in the manner described in this invention will not cause any significant obstruction to the total exhaust flow into the exhaust downpipe.

EP-A-0 247 631, which is believed to represent the most pertinent prior art discloses an exhaust system for use in an internal combustion engine including a plurality of independent passages each connected to an exhaust port of a cylinder, at least one communicating passage is provided to connect the independent passages to each other at points upstream of a junction where the independent passages are joined together. The communicating passage in this case does have an area in excess of 25% of the total port area but it is provided in order to permit the exhaust gases from one cylinder to flow into the independent passages for the other cylinders, enabling the gas temperature to be lowered for the purpose of improving fuel consumption. Because of this difference in function, the design of the communicating passage is different from that of the branches of the second manifold in the present invention in that it does not terminate within the ports in close proximity to the exhaust valves and it does direct the exhaust gases of one cylinder in a manner to scour the ends of the closed exhaust ports of other cylinders.

### Brief description of the drawings

The invention will now be described further, by way of example, with reference to the accompanying drawings, in which :-
Figure 1 is a schematic representation of an engine fitted with an exhaust system of the invention, and
Figure 2 is a section through an exhaust port of the engine shown in Figure 1.

### Detailed description of the preferred embodiment

The drawings show an engine having a cylinder head 12 with four cylinders each having two inlet valves 14, two exhaust valves 18 and a spark plug 16. The exhaust valve 18 of each cylinder lead to a common exhaust port 20 from which gases are discharged into two separate manifolds.

The first manifold 24 has a common plenum and four individual branches 22 leading from the plenum to the individual exhaust ports 20. A downpipe 26 leads from the common plenum to the ambient through a catalytic converter and a silencer (muffler) which are not shown. The illustrated embodiment also includes a turbocharger 28 arranged in the downpipe 26 and serving to pressurise the air intake.

The second manifold 34 has a plenum connected to the individual exhaust ports 20 by branches 32 that also face the exhaust valves 18 and terminate within the exhaust ports 20 near the exhaust valves 18. The cross-section of the branches 32 facing the exhaust flow occupies a minimum of 25% of the cross-sectional area of the exhaust port 20 and a maximum area that depends on the number of cylinders in the bank. In general, if the bank has N cylinders, then the fraction of the exhaust port occupied by the branch 32 of the second manifold should not exceed (N-1)/N. Hence for a bank of 2 cylinders, the branch 32 should not exceed 50% of the port area and for a bank of 4 cylinders, the branch 32 should not exceed 75% of the total port area. It is preferred to dimension the second branches 32 to be as close as possible to the maximum values given above as this will result in the best flow distribution with the steadiest flow rate through the exhaust ports of all the cylinders. In essence the formula given above for the maximum value of the cross-section of the branch 32 facing the flow discharged from the open exhaust valve ensures that substantial equal flow rates are discharged from the exhaust ports of all the cylinders as a result of the one open valve.

The flow is directed through the second manifold not by static pressure but by the dynamic head formed at the entrance of the branch 32 driven by the momentum of the gases discharging from the open exhaust valve. When the gases are subsequently discharged from the common plenum of the second manifold into an exhaust port with a closed valve, the gases follow a U-flow and scour the closed end of the exhaust port to remove any hydrocarbon rich pockets that may otherwise remain stagnant. The recirculation of the exhaust gases through more than one exhaust port before they are ultimately discharged improves the heat transfer between the exhaust gases and the engine coolant allowing the engine coolant to warm up more rapidly, this being particularly important in the case of a diesel engine.

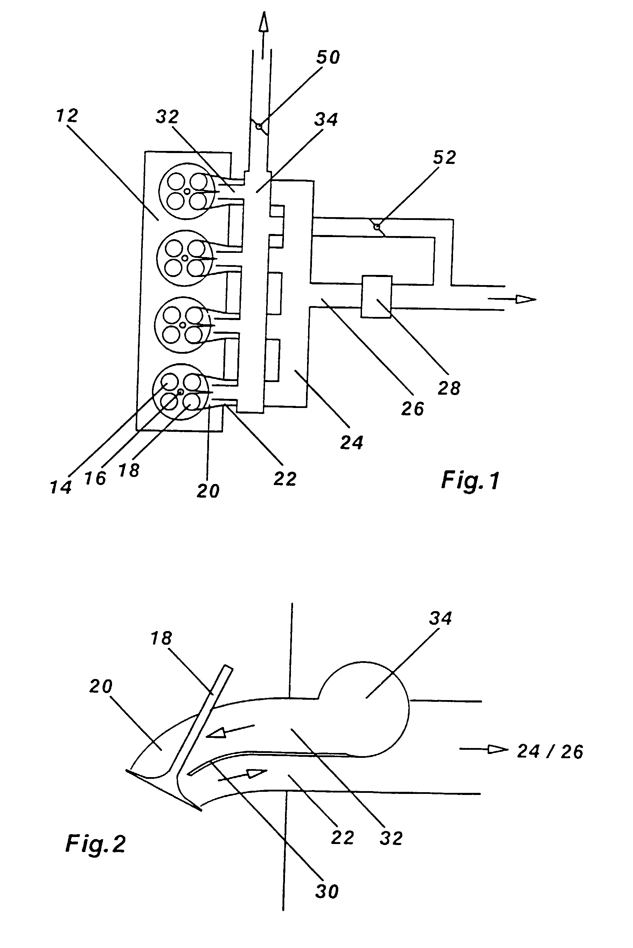

The two branches 22, 32 connected to each exhaust port 20 effectively divide the port between them and the geometry of the partition is not critical. Thus one of the branches may be a tube extending into the port as shown in Figure 1, or a partition wall 30 may be formed in the port as shown in Figure 2 to define the individual branches. The important factors are the areas of the branches and that their open ends must face and be located near to the exhaust valves.

In the case of the embodiment of Figure 1, the plenum of the second manifold 34 is also connected to the downpipe 26 at a point downstream of the turbocharger 28 by way of a proportioning valve 52 which could be the waste gate of the turbocharger 28. Furthermore, EGR gases are drawn from the common plenum of the second manifold 34 past an EGR valve 50.

The valve 52 can vary the proportion of gases recirculated to other ports by the second manifold 34. When the valve 52 is fully open, for example, during full load operation, the exhaust gases from both manifolds will be directly discharged to the downpipe. Thus, under high load, only the normal amount of heat is transferred to the engine coolant and there is no danger of overheating the engine.

The exhaust system offers two convenient places for locating an exhaust gas oxygen sensor (EGO or HEGO sensor) if one should be required for the engine management system. If it is desired that the EGO sensor respond to the average composition over all the cylinders, then it can be located in the downpipe 26. On the other hand, if it is desired to be able to sense the variations between individual cylinders, then the sensor may be located in the common plenum of the second manifold 34 which sees the discharges from the individual cylinders sequentially.

In stark contrast to the communicating passage disclosed in EP-A-0 247 631 which is intended to cool the exhaust gases before they reach a turbocharger, in the present invention it is desirable to take steps to ensure that the second manifold 34 and its branches 32 run as hot as possible. To this end they may be formed of thin gauge metal so as to have a low thermal capacity and they may be thermally insulated from the ambient. In this way, heat loss is minimised from the recirculated gases during engine warm up and the hot surfaces located within the exhaust ports promote post flame oxidation of pockets of unburnt hydrocarbon in the exhaust gases. This is again to be contrasted with EP-A-0 247 631 in which it is preferred to surround the communicating passage with a coolant filled jacket.

It should also be noted that whereas individual throttles are provided in the communicating passage of EP-A-0 247 631 to isolate the individual ports from one another completely when desired, in the preferred embodiment of the present invention, there is always intercommunication between the individual ports through the branches of the second manifold but the proportion of gases directed to the exhaust ports of adjacent cylinders is varied by the valve 52 offering a shorter exit path to the exhaust gases.

The throttles in the prior art patent are open at high load to provide the longest path for the exhaust gases so as to improve cooling but are closed under low load whereas, in the present invention, the effect of opening the valve 52 under high load is to allow the exhaust gases collected by the branches of the second manifold to exit to ambient by the shortest path.

## Claims

1. A multicylinder engine exhaust manifold system comprising a first manifold (24) having branches leading from individual exhaust ports (20) of the engine to a downpipe, and a second manifold (34) for interconnecting the exhaust ports (20) and also having branches (32) leading to the individual exhaust ports of the engine, the cross-sectional area of each branch (32) of the second manifold (34) facing the exhaust flow from the associated exhaust valve (18) being no less than 25% of the total port area, characterised in the branches (32) of the second manifold (34), in common with the branches (22) of the first manifold (24) terminate within the ports (20) in close proximity to the exhaust valves (18), whereby a large proportion of the exhaust flow discharged from the exhaust valve (18) of one cylinder is captured by the associated branch (32) of the second manifold (34) and distributed by the second manifold (34) to the exhaust ports (20) of adjacent cylinders where the exhaust valves (18) are closed and leave the exhaust ports of the adjacent cylinders through the associated branches (22) of the first manifold (24), scouring the closed ends of the exhaust ports (20) in the process.

2. An exhaust manifold system as claimed in claim 1, wherein the second manifold (24) is also connected to the downpipe of the exhaust system through a valve (52) to vary the proportion of gases that are recirculated through the second manifold (34) in dependence upon the engine operating conditions.

3. An exhaust system as claimed in claim 2, further comprising a turbocharger (28) connected between the first manifold (24) and the downpipe, the turbocharger (28) having a waste gate connected between the second manifold and the downpipe, whereby the waste gate acts as the proportioning valve (52) between the manifolds.

4. An exhaust system as claimed in claim 2 or 3, wherein exhaust gases for recirculation to the engine intake system are taken from the second manifold (34) through an EGR valve (50).

5. An exhaust system as claimed in any preceding claim, wherein the engine has a bank of N cylinders, and the branches of the second manifold are each dimensioned to capture a fraction no greater than (N-1)/N of the total exhaust flow discharged from the exhaust valve of the associated cylinder.

6. An exhaust system as claimed in any preceding claim, wherein the branches (22,32) of the respective first and second manifolds within the exhaust port are formed by a generally flat partition wall dividing the exhaust port (20).

7. An exhaust system as claimed in any of claims 1 to 5, wherein the branches (22,32) of one of the first and second manifolds is formed by a pipe extending into the exhaust port.

8. An exhaust system as claimed in any preceding claim, having an exhaust gas oxygen sensor mounted near the exit of the first manifold (24).

9. An exhaust system as claimed in any preceding claim, having an exhaust gas oxygen sensor mounted in a common plenum (34) of the second manifold.

10. An exhaust system as claimed in any preceding claim, wherein the second manifold has low thermal capacity, and is insulated to minimise heat loss.

## Patentansprüche

1. Ein Abgas-Sammelleitungssystem für einen Mehrzylindermotor bestehend aus einer ersten Sammelleitung (24) mit Abzweigungen, die von den individuellen Auspufföffnungen (20) des Motors zu einem Ablassrohr führen und einer zweiten Sammelleitung (34) zur Verbindung der Auspufföffnungen (20), die ebenfalls Abzweigungen (32) haben, die zu den individuellen Auspufföffnungen des Motors führen, wobei die Querschnittsfläche jeder Abzweigung (32) der zweiten Sammelleitung (34) dem Abgasfluss von dem entsprechenden Auslassventil (18) gegenüberliegt, das nicht weniger als 25 % der gesamten Öffnungsfläche beträgt, dadurch gekennzeichnet dass die Abzweigungen (32) der zweiten Sammelleitung (34) zusammen mit den Abzweigungen (22) der ersten Sammelleitung (24) in den Öffnungen (20) enden, in unmittelbarer Nähe zu den Auslassventilen (18), wodurch ein grosser Anteil des Abgasflusses, der vom Auslassventil (18) eines Zylinders abgestossen wird, von der entsprechenden Abzweigung (32) der zweiten Sammelleitung (34) erfasst wird und von der zweiten Sammelleitung (34) an die Auspufföffnungen (20) der benachbarten Zylinder verteilt wird, wo die Auslassventile (18) geschlossen sind und die Auspufföffnungen der benachbarten Zylinder durch die entsprechenden Abzweigungen (22) der ersten Sammelleitung (24) verlassen, wodurch die geschlossenen Enden der Auspufföffnungen (20) in dem Vorgang gereinigt werden.

2. Ein Abgas-Sammelleitungssystem nach Anspruch 1, in dem die zweite Sammelleitung (24) auch mit dem Ablassrohr des Abgassystems durch ein Ventil (52) verbunden ist, um den Anteil der Gase, die durch die zweite Sammelleitung (34) in Abhängigkeit von der Betriebsart des Motors zurückgeleitet werden, zu verändern.

3. Ein Abgassystem nach Anspruch 2, ausserdem bestehend aus einem Turboauflader (28), der zwischen der ersten Sammelleitung (24) und dem Ablassrohr verbunden ist, wobei der Turboauflader (28) eine Ablauföffnung hat, die zwischen der zweiten Sammelleitung und dem Ablassrohr verbunden ist, wodurch die Ablauföffnung als das proportionierende Ventil (52) zwischen den Sammelleitungen fungiert.

4. Ein Abgassystem nach Anspruch 2 oder 3, in dem Abgase zur Zurückführung zum Motoreinlassystem von der zweiten Sammelleitung (34) durch ein EGR-Ventil (50) genommen werden.

5. Ein Abgassystem nach irgendeinem der vorausgegangenen Ansprüche, in dem der Motor eine Bank mit N-Zylindern hat und in dem die Abzweigungen der zweiten Sammelleitung jeweils so ausgelegt sind, dass sie einen Anteil erfassen, der nicht grösser als (N-1)/N des gesamten Abgasflusses ist, der vom Auslassventil des entsprechenden Zylinders ausgestossen wird.

6. Ein Abgassystem nach irgendeinem der vorausgegangenen Ansprüche, in dem die Abzweigungen (22, 32) der jeweiligen ersten und zweiten Sammelleitung in der Auspufföffnung durch eine im allgemeinen flache Unterteilungswand gebildet werden, die die Auspufföffnung (20) teilt.

7. Ein Abgassystem nach irgendeinem der Ansprüche 1 bis 5, in dem die Abzweigungen (22, 32) einer der ersten und zweiten Sammelleitung durch ein Rohr gebildet werden, das sich in die Abgasöffnung erstreckt.

8. Ein Abgassystem nach irgendeinem der vorausgegangenen Ansprüche mit einem Abgas Sauerstoff-Messfühler, der nahe des Ausgangs der ersten Sammelleitung (24) angebracht ist.

9. Ein Abgassystem nach irgendeinem der vorausgegangenen Ansprüche mit einem Abgas Sauerstoff-Messfühler, der in einem gemeinsamen Bläser (34) der zweiten Sammelleitung angebracht ist.

10. Ein Abgassystem nach irgendeinem der vorausgegangenen Ansprüche, in dem die zweite Sammelleitung eine niedrige Wärmekapazität hat und isoliert ist, um den Wärmeverlust auf ein Minimum zu reduzieren.

## Revendications

1. Système de collecteurs d'échappement pour moteur multicylindre comprenant un premier collecteur (24) comportant des branches conduisant depuis les orifices d'échappement individuels (20) du moteur jusqu'à un tuyau de descente, et un second collecteur (34) destiné à relier les uns aux autres les orifices d'échappement (20) et comportant également des branches (32) conduisant aux orifices d'échappement individuels du moteur, la section de passage de chaque branche (32) du second collecteur (34) faisant face au flux d'échappement provenant de la soupape d'échappement (18) associée n'étant pas inférieure à 25% de la section totale de l'orifice, caractérisé en ce que les branches (32) du second collecteur (34), en commun avec les branches (22) du premier collecteur (24) se terminent à l'intérieur des orifices (20) à proximité immédiate des soupapes d'échappement (18), grâce à quoi une forte proportion du flux d'échappement évacué depuis la soupape d'échappement (18) d'un cylindre est prélevée par la branche associée (32) du second collecteur (34) et répartie par le second collecteur (34) vers les orifices d'échappement (20) des cylindres adjacents dans lesquels les soupapes d'échappement (18) sont fermées, et quitte les orifices d'échappement des cylindres adjacents par l'intermédiaire des branches associées (22) du premier collecteur (24), en balayant les extrémités fermées des orifices d'échappement (20) au passage.

2. Système de collecteurs d'échappement selon la revendication 1, dans lequel le second collecteur (24) est également relié au tuyau de descente du système d'échappement par l'intermédiaire d'une vanne (52) afin de faire varier la proportion des gaz qui sont remis en circulation par l'intermédiaire du second collecteur (34) en fonction des conditions de fonctionnement du moteur.

3. Système d'échappement selon la revendication 2, comprenant en outre un turbocompresseur (28) monté entre le premier collecteur (24) et le tuyau de descente, le turbocompresseur (28) comportant une soupape de décharge montée entre le second collecteur et le tuyau de descente, grâce à quoi la soupape de décharge agit comme soupape de répartition (52) entre les collecteurs.

4. Système d'échappement selon la revendication 2 ou 3, dans lequel les gaz d'échappement destinés à la recirculation vers le système d'admission du moteur sont prélevés à partir du second collecteur (34) par l'intermédiaire d'une vanne de recirculation des gaz d'échappement (50).

5. Système d'échappement selon l'une quelconque des revendications précédentes, dans lequel le moteur comporte une rangée de N cylindres, et les branches du second collecteur sont dimensionnées chacune de façon à prélever une fraction ne dépassant pas (N-1)/N du débit d'échappement total refoulé par la soupape d'échappement du cylindre associé.

6. Système d'échappement selon l'une quelconque des revendications précédentes, dans lequel les branches (22, 32) des premier et second collecteurs respectifs à l'intérieur de l'orifice d'échappement sont définies par une paroi de séparation généralement plate divisant l'orifice d'échappement (20).

7. Système d'échappement selon l'une quelconque des revendications 1 à 5, dans lequel les branches (22, 32) de l'un des premier et second collecteurs sont formées par une conduite s'étendant jusque dans l'orifice d'échappement.

8. Système d'échappement selon l'une quelconque des revendications précédentes, comportant un capteur d'oxygène dans les gaz d'échappement monté à proximité de la sortie du premier collecteur (24).

9. Système d'échappement selon l'une quelconque des revendications précédentes, comportant un capteur d'oxygène dans les gaz d'échappement monté dans une chambre commune (34) du second collecteur.

10. Système d'échappement selon l'une quelconque des revendications précédentes, dans lequel le second collecteur présente une faible capacité thermique, et est isolé afin de minimiser les déperditions de chaleur.
